# EUROPEAN PATENT SPECIFICATION

(11) **EP 2 600 551 B1**
(45) Date of publication and mention of the grant of the patent: **02.01.2019**
(21) Application number: 11811747.2
(22) Date of filing: 23.03.2011
(51) Int. Cl.: H04L 1/00

(54) **METHOD AND EQUIPMENT FOR INCREASING BITWISE THROUGHPUT IN TRANSMITTER OF LTE BASE STATION**
VERFAHREN UND AUSRÜSTUNG ZUR BITWEISEN ERHÖHUNG DES DURCHSATZES IN EINEM SENDER EINER LTE-BASISSTATION
PROCÉDÉ ET ÉQUIPEMENT POUR AUGMENTER LE DÉBIT AU NIVEAU DES BITS DANS UN ÉMETTEUR D'UNE STATION DE BASE LTE

(30) Priority: 28.07.2010 CN 201010238897
(43) Date of publication of application: 05.06.2013
(73) Proprietor: ZTE Corporation, Shenzhen, Guangdong 518057 (CN)
(72) Inventor: YANG, Ning, Shenzhen Guangdong 518057 (CN); XU, Hongyi, Shenzhen Guangdong 518057 (CN); FENG, Kai, Shenzhen Guangdong 518057 (CN)
(74) Representative: Zinkler, Franz
(86) International application number: PCT/CN2011/072080
(87) International publication number: WO 2012/013045

(56) References cited:
- EP-A2- 2 096 783
- WO-A1-2010/079728
- CN-A- 101 359 972
- CN-A- 101 594 205
- US-A1- 2009 196 244
- US-A1- 2009 238 066
- SOO YUN HWANG ET AL: "Implementation of an Encoder Based on Parallel Structure for LTE Systems", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706374, ISBN: 978-1-4244-6396-1
- MOTOROLA: "Code Block Segmentation for Contention-Free Turbo Interleavers", INTERNET CITATION, 10 November 2006 (2006-11-10), XP002473950, Retrieved from the Internet: URL:http://www.3gpp.org/ftp/tsg_ran/WG1_RL 1/TSGR1_47/Docs/ [retrieved on 2008-03-26]

## Description

### Field of the Invention

The present invention relates to the digital communication field, and particularly to a method and device for increasing bit-level throughput of transmitter of Long Term Evolution (LTE) Base Station (BS).

### Background of the Invention

With the rapid development of the mobile communication, people put forward increasingly higher requirements for the mobile communication quality and the service types provided by the mobile communication. LTE is the evolution of 3G (the 3rd generation mobile communication), which can meet such requirements, and thus wins lots of attention. LTE is the radio transmission technical standards provided by the 3GPP (3rd Generation Partnership Project). It can not only provide high-quality voice services, but also provide multimedia services.

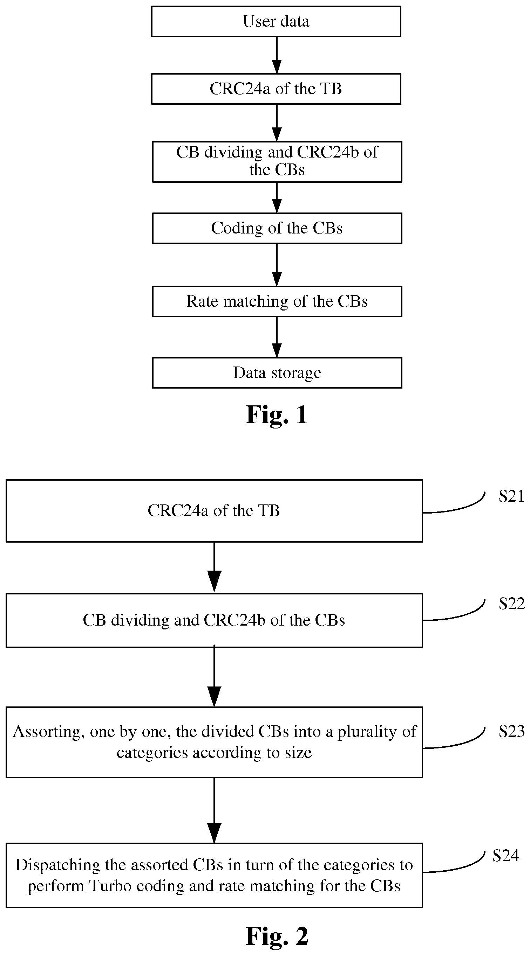

In the LTE system, to improve the receiving quality of the uplink and downlink, the technologies of OFDM (Orthogonal Frequency Division Multiplexing), MIMO (Multiple-Input Multiple-Output), Turbo coding, etc. are adopted. For the transmitter of a BS, the bit-level processing is a very important step. The bit-level processing completes the following functions: adding of CRC24a of the Transmit Block (TB), the Code Block (CB) dividing, adding of CRC24b of the divided CBs, the Turbo coding and the rate matching of the CBs, and after the CB cascade, the storage of the bit-level processing data for the symbol-level usage. The block diagram of the related overall bit-level processing of a LTE BS is as shown in Fig. 1.

In Fig. 1, the Turbo coding and the rate matching modules are the core modules in the OFDM system. The Turbo coding has the process of inner interleaving, and all data must be input before related processing can be performed. The rate matching also has the process of row-column interleaving, and likewise all data must be input before the data can be output and stored into the memory space of the bit-level and the symbol-level interface for the use of related symbol-level modules. Since the Turbo coding and the rate matching can be processed only after all data are input, it requires the RAM to cache the data during the internal processing. To increase the throughout, the Ping-Pong operation is generally used. In the LTE protocol, the size of the CBs after the bit-level CB dividing can be 188 values, ranging from 40 to 6144. When the CBs with large size difference (such as the sizes of the CBs being 40 and 6144) appear alternatively in the input for the Turbo and rate matching, the efficiency of the whole processor is the lowest. The OFDM system conducts related symbol-level processing only after finishing the bit-level processing. Common symbol-level processing is conducted by adopting Ping-Pong operation based on symbol, so that the main delay lies in the bit-level. Therefore, the shortening of the bit-level delay plays a significant role in shortening the delay of the whole downlink and in improving the throughout.

In the related art, usually the increase of the parallelism degree or the increase of the processing unit routes is used to solve the bit-level delay. However, such method causes more resource consumption and lower efficiency, and cannot effectively solve the bit-level delay of the existing OFDM system.

XP031706374 discloses an implementation of an encoder based on parallel structure for LTE systems. XP002473950 (3GPP R1-063062) discloses to restrict interleaver sizes to be equal or adjacent.

### Summary of the Invention

The objective of the present invention is to provide a method and device for increasing bit-level throughput of transmitter of a LTE BS, wherein the method changes the dispatching sequence to avert the alternation of big and small CBs with large difference (such as 40 and 6144). This solution can improve the efficiency of the Turbo coding and the rate matching modules, increase the bit-level throughout of the transmitter OFDM system, and thus improve the throughput of transmitter of the whole BS.

According to one aspect of the present invention, a method for increasing bit-level throughput of transmitter of LTE BS is provided, comprising adding Cyclic Redundancy Check (CRC) 24a of a Transmission Block (TB) and dividing Code Blocks (CBs) during course of bit-level processing, wherein after dividing the CBs, the method further comprises:
assorting the divided CBs in turn into a plurality of categories according to size; and
dispatching the assorted CBs in turn of the plurality of categories to perform Turbo coding and rate matching for the CBs.
wherein the Turbo coding has the process of inner interleaving, and the rate matching also has the process of row-column interleaving.

Further, assorting the divided CBs in turn into the plurality of categories according to the size comprises:
calculating and determining a size of the divided CBs according to a number of the CBs and a size of the TB after adding CRC; and
determining the assorting of the CBs according to sizes of the divided CBs and a number of categories required,
wherein the CBs are assorted in such a mode that maximum value of maximum differences of the sizes of the CBs in each category is less than the maximum value in any other assorting mode.

Further, calculating and determining the size of the divided CBs according to the number of the CBs and the size of the TB after adding CRC comprises:
determining a size of an original TB;
determining the number of the CBs after the TB is divided into the CBs according to the size of the original TB, a size of a largest CB and a number of bits added by CRC; and
calculating the size of the TB after adding CRC according to the size of the original TB and the number of the divided CBs.

Further, determining the assorting of the CBs according to the sizes of the divided CBs and the number of categories required comprises that: the number of categories required is at least one.

Further, dispatching the assorted CBs in turn of the plurality of categories to perform the Turbo coding and the rate matching for the CBs comprises:
starting from CBs of a first category to perform the Turbo coding and the rate matching for the assorted CBs; and
after the Turbo coding and the rate matching for CBs of one category are finished, performing the Turbo coding and the rate matching for CBs of a next category.

Further, after the Turbo coding and the rate matching for CBs of one category are finished, the method comprises: performing bit-level data storage for the CBs after the rate matching.

According to another aspect of the present invention, an device for increasing bit-level throughput of transmitter of a LTE BS is provided, comprising a Transmission Block (TB) Cyclic Redundancy Check (CRC) 24a adding module, a Code Block (CB) dividing module, a CB Turbo coding module and a CB rate matching module, wherein the device further comprises: an assorting module and a dispatching module; wherein
the assorting module, configured to assort the divided CBs in turn into a plurality of categories according to size; and
the dispatching module, configured to dispatch the assorted CBs in turn of the plurality of categories to perform Turbo coding and rate matching for the CBs.
wherein the Turbo coding has the process of inner interleaving, and the rate matching also has the process of row-column interleaving.

Further, the assorting module further comprises:
a calculation module, configured to calculate and determine a size of the divided CBs according to a number of the CBs and a size of a TB after adding CRC.

Comparing with the related art, the present invention has the following beneficial effects.
1. The resource consumption and the cost of the present invention is low, and the present invention mainly uses software control. Thus the present invention can increase the bit-level throughout significantly with little increase of the cost.
2. The Turbo coding and rate matching for the assorted CBs are performed according to a certain sequence of size, which can improve the efficiency of the Turbo coding and the rate matching, and save power. Thus, this solution can avert the continuous alternation of big and small CBs with large difference (such as 40 and 6144), and further avoid the situation where one route of the Turbo coding and rate matching is idle.
3. The data delay of the whole BS is reduced, thus increasing the throughput of transmitter of the whole BS. The OFDM system conducts related symbol-level processing after finishing the bit-level processing. Generally, symbol-level processing is conducted by adopting Ping-Pong operation based on symbol. Thus, the main delay lies in the bit-level. Hence, the increase of the bit-level throughout has direct effect on the throughout of the whole transmitter.
4. Sequencing is avoided by dispatching the CBs according to categories, thus facilitating hardware realization, and promoting application.

### Brief Description of the Drawings

Fig. 1 is a block diagram of the related overall bit-level processing in a LTE BS;
Fig. 2 is a flowchart of the method for increasing bit-level throughout according to the present invention;
Fig. 3 is a diagram of the assorting process of the CBs according to the present invention;
Fig. 4 is a diagram of the dispatching process of the assorted CBs according to the present invention; and

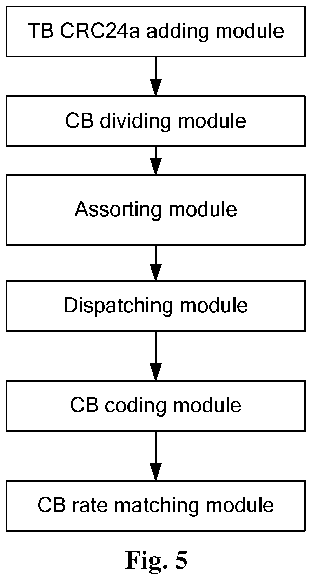

Fig. 5 is a block diagram of the structure of the device for increasing bit-level throughout according to the present invention.

### Detailed Description of the Embodiments

The preferred embodiments of the present invention are further illustrated hereinafter in conjunction with the drawings. It should be understood that the embodiments described herein are just to illustrate and explain, rather than limit the present invention.

The present invention provides a method and device for increasing bit-level throughput of transmitter at the LTE BS side. They are detailed as follows.

Fig. 2 is a flowchart of a method for increasing bit-level throughout according to the present invention. As shown in Fig. 2, the procedure of the method for increasing bit-level throughput of transmitter at the LTE BS side comprises the following steps.

Step S21, CRC24a of the TB; that is, the CRC24a of the TB in the related art is added.

Step S22, CB dividing and the CRC24b of the CBs; that is, the CB dividing and adding of the CRC24b of the CBs after the CB dividing in the related art are performed.

Step S23, assorting, one by one, the divided CBs into a plurality of categories according to size.

Step S24, dispatching the assorted CBs in turn of the categories to perform Turbo coding and rate matching for the CBs.

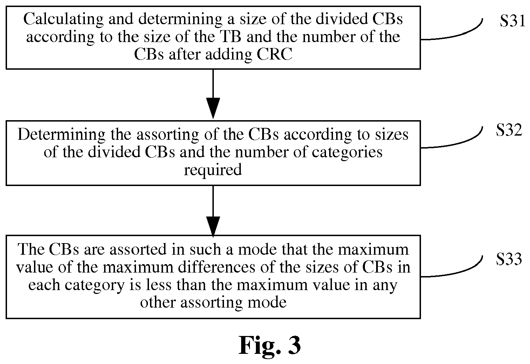

In the above, the flow of the assorting of the divided CBs into a plurality of categories according to size is as shown in Fig. 3. The procedure comprises the following steps.

Step S31, calculating and determining a size of the divided CBs according to the size of the TB and the number of the CBs after adding CRC.

Step S32, determining the assorting of the CBs according to sizes of the divided CBs and the number of categories required.

Step S33, the CBs are assorted in such a mode that the maximum value of the maximum differences of the sizes of CBs in each category is less than the maximum value in any other assorting mode.

In the above, in Step S31, the method for determining the size of the TB and the number of the CBs after adding CRC can comprise:
first, determining the size tb_size of the original TB;
determining the number of the CBs after the TB is divided into the CBs according to the size of the original TB (tb_size), the size of the largest CB (Z) and the bit number of the added CRC (L);
calculating the size of the TB after adding CRC according to the size of the original TB (tb_size) and the number of the divided CBs (C); and
calculating the size of the divided CBs according to tb_size; and based on the deduction of the LTE protocol, since the number of NULL added to the first CB of the CB dividing is 0, the calculation of the size of the CBs can be simplified; first, calculating the number of the divided CBs *C=[tb_size*/*(Z-L)]*; then calculating the size of the TB after adding CRC; if C=1, the size of the TB after adding CRC is *tb_size'=tb_size*; otherwise the size of the TB after adding CRC is *tb_size'=tb_size+C*L*; and at last, calculating the size of the divided CBs *K=tb_size'*/*C*.

In the above, the determination of the maximum value of the maximum differences of the sizes of CBs in each category in the assorting of Step S33 comprises that the maximum difference in each category of CBs is determined by comparing the CB of largest size with that the CB of smallest size in each category of CBs, and then the maximum value is obtained by comparing the maximum differences of each category of CBs;
According to the number of categories required, the assorting mode which makes the maximum value after the assorting be less than the maximum values of other assorting modes is found.

If the calculated sizes of the divided CBs are 40, 56, 72, 120, 136, 144 and 6144, and the number of categories required is four, then through the assorting method above, the following result can be obtained: 40 and 56 belong to Category 1, 72 belongs to Category 2, 120, 136 and 144 belong to Category 3, and 6144 belongs to Category 4. The maximum differences of the sizes of CBs in each category are: Category 1 is 16, Category 2 is 0, Category 3 is 24, and Category 4 is 0. Thus the maximum value of the maximum differences of the sizes of CBs in each category is determined to be 24. The maximum value of the maximum differences of the sizes of CBs in each category determined by this assorting mode is less than the maximum values in any other assorting mode. Turbo coding and rate matching are performed in turn of the plurality of categories for the assorted CBs. Hence, this solution can avoid the situation where the adjacent CBs have great difference in size (such as 40 and 6144 appear alternatively), and the situation where one route of the Turbo and rate matching is idle, thus improving the efficiencies of the Turbo coding and the rate matching.

Certainly, the number of categories required is at least one, and the number of categories can be more. The increase of the number of categories means more dispatching times and higher complexity, but also indicates improved use efficiencies of the Turbo and rate matching modules, and saves power.

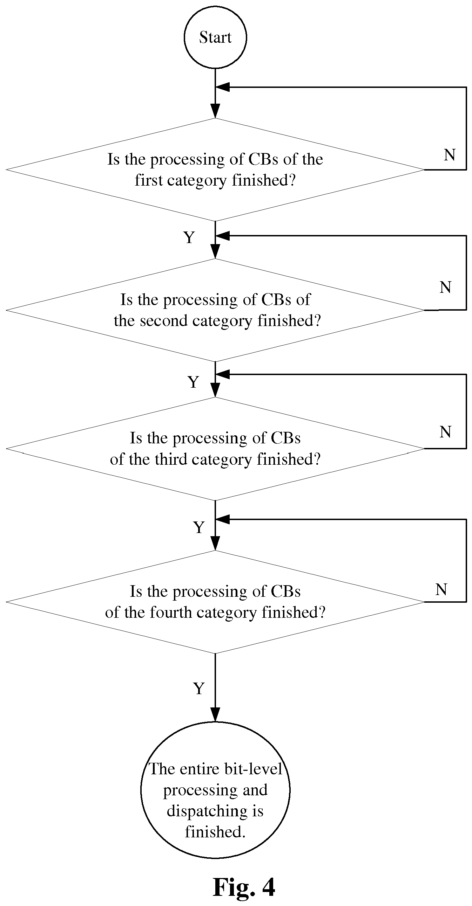

The dispatching process of the CBs of the four categories above is as shown in Fig. 4. Before the Turbo coding and the rate matching of the first category of CBs are finished, the processing of the next categories will not be started. The processing of the next category of CBs will not be started until the storage of the parallel bit-level data of CBs of this category is completely finished.

According to another aspect of the present invention, an device for increasing bit-level throughput of transmitter of LTE BS is provided, comprising a TB CRC24a adding module, a CB dividing module, a CB Turbo coding module, a CB rate matching module, and:
an assorting module, configured to assort the divided CBs according to size; and
a dispatching module, configured to dispatch the assorted CBs in turn of a plurality of categories to perform Turbo coding and rate matching for the CBs.

In the above, the assorting module also comprises a calculation module, configured to calculate and determine the size of the divided CBs according to the size of the TB and the number of the CBs after adding CRC.

The user data are processed by the TB CRC24a adding module and the CB dividing module respectively. Then the divided CBs are assorted according to size by the assorting module. After the assorting, the calculation module calculates the sizes of the divided CBs. Then the assorting is performed in such a mode that the maximum value of the maximum differences of the sizes of CBs in each category is less than the maximum value in any other assorting mode. At last, the dispatching module dispatches the assorted CBs in turn of the categories to perform the Turbo coding and the rate matching for the CBs, so as to avoid the situation where the adjacent CBs have great difference in size (such as 40 and 6144 appear alternatively), which affects the increasing of bit-level throughput of transmitter of the LTE BS.

The contents above are intended to describe and illustrate the present invention in conjunction with the preferred embodiments. However, it should not be held that the implementation of the present invention is limited to the above description. To those skilled in the art to which the present invention belongs, there are many obvious equivalents or substitutions to the present invention that do not deviate from the concept of the present invention. Such obvious equivalents or substitutions shall be regarded to be within the protection scope of the present invention.

## Claims

1. A method for increasing bit-level throughput of a transmitter of a Long Term Evolution, LTE, Base Station, BS, comprising adding Cyclic Redundancy Check, CRC, 24a of a Transmission Block, TB, and dividing Code Blocks, CBs, during course of bit-level processing (S21 and S22), wherein after dividing the CBs, the method further comprises:
assorting the divided CBs in turn into a plurality of categories according to size; and
dispatching the assorted CBs in turn of the plurality of categories to perform Turbo coding and rate matching for the CBs (S24);
wherein the Turbo coding has the process of inner interleaving, and the rate matching also has the process of row-column interleaving.

2. The method for increasing bit-level throughput of a transmitter of a LTE BS according to Claim 1, **characterized in that** assorting the divided CBs in turn into the plurality of categories according to the size comprises:
calculating and determining a size of the divided CBs according to a number of the CBs and a size of the TB after adding CRC (S31); and
determining the assorting of the CBs according to sizes of the divided CBs and a number of categories required (S32),
wherein the CBs are assorted in such a mode that maximum value of maximum differences of the sizes of the CBs in each category is less than the maximum value in any other assorting mode (S33).

3. The method for increasing bit-level throughput of a transmitter of a LTE BS according to Claim 2, **characterized in that** calculating and determining the size of the divided CBs according to the number of the CBs and the size of the TB after adding CRC comprises:
determining a size of an original TB;
determining the number of the CBs after the TB is divided into the CBs according to the size of the original TB, a size of a largest CB and a number of bits added by CRC; and
calculating the size of the TB after adding CRC according to the size of the original TB and the number of the divided CBs.

4. The method for increasing bit-level throughput of a transmitter of a LTE BS according to Claim 2, **characterized in that** determining the assorting of the CBs according to the sizes of the divided CBs and the number of categories required comprises that: the number of categories required is at least one.

5. The method for increasing bit-level throughput of a transmitter of a LTE BS according to Claim 1, **characterized in that** dispatching the assorted CBs in turn of the plurality of categories to perform the Turbo coding and the rate matching for the CBs comprises:
starting from CBs of a first category to perform the Turbo coding and the rate matching for the assorted CBs; and
after the Turbo coding and the rate matching for CBs of one category are finished, performing the Turbo coding and the rate matching for CBs of a next category.

6. The method for increasing bit-level throughput of a transmitter of a LTE BS according to Claim 5, **characterized in that** after the Turbo coding and the rate matching for CBs of one category are finished, the method comprises:
performing bit-level data storage for the CBs after the rate matching.

7. A device for increasing bit-level throughput of a transmitter of a Long Term Evolution, LTE, Base Station, BS, comprising a Transmission Block, TB, Cyclic Redundancy Check, CRC, 24a adding module, a Code Block, CB, dividing module, a CB Turbo coding module and a CB rate matching module, wherein the device further comprises: an assorting module and a dispatching module; wherein
the assorting module is configured to assort the divided CBs in turn into a plurality of categories according to size; and
the dispatching module is configured to dispatch the assorted CBs in turn of the plurality of categories to perform Turbo coding and rate matching for the CBs;
wherein the Turbo coding has the process of inner interleaving, and the rate matching also has the process of row-column interleaving.

8. The device for increasing bit-level throughput of a transmitter of a LTE BS according to Claim 7, **characterized in that** the assorting module further comprises a calculation module, configured to calculate and determine a size of the divided CBs according to a number of the CBs and a size of a TB after adding CRC; and
assorting the divided CBs in turn into a plurality of categories according to size by the assorting module comprises: determining the assorting of the CBs according to sizes of the divided CBs and a number of categories required, wherein the CBs are assorted in such a mode that maximum value of maximum differences of the sizes of the CBs in each category is less than the maximum value in any other assorting mode.

## Patentansprüche

1. Ein Verfahren zum Erhöhen eines Bitpegeldurchsatzes eines Senders einer Long Term Evolution-, LTE-, Basisstation, BS, das ein Hinzufügen einer zyklischen Redundanzprüfung, CRC, 24a eines Sendeblocks, TB, und ein Unterteilen von CodeBlöcken, CBs, während eines Verlaufs einer Bitpegelverarbeitung (S21 und S22) aufweist, wobei das Verfahren nach dem Unterteilen der CBs ferner folgende Schritte aufweist:
Gruppieren der unterteilten CBs wiederum gemäß einer Größe in eine Mehrzahl von Kategorien; und
Abfertigen der gruppierten CBs wiederum der Mehrzahl von Kategorien, um ein Turbocodieren und Ratenanpassen für die CBs durchzuführen (S24);
wobei das Turbocodieren den Prozess eines inneren Verschachtelns aufweist und das Ratenanpassen außerdem den Prozess eines Zeile-Spalte-Verschachtelns aufweist.

2. Das Verfahren zum Erhöhen eines Bitpegeldurchsatzes eines Senders einer LTE-BS gemäß Anspruch 1, das **dadurch gekennzeichnet ist, dass** das Gruppieren der unterteilten CBs wiederum gemäß der Größe in die Mehrzahl von Kategorien folgende Schritte aufweist:
Berechnen und Bestimmen einer Größe der unterteilten CBs gemäß einer Anzahl der CBs und einer Größe des TB nach dem Hinzufügen der CRC (S31); und
Bestimmen des Gruppierens der CBs gemäß Größen der unterteilten CBs und einer erforderlichen Anzahl von Kategorien (S32),
wobei die CBs in einem derartigen Modus gruppiert werden, dass ein maximaler Wert maximaler Unterschiede der Größen der CBs in jeder Kategorie kleiner ist als der maximale Wert in einem beliebigen anderen Gruppierungsmodus (S33).

3. Das Verfahren zum Erhöhen eines Bitpegeldurchsatzes eines Senders einer LTE-BS gemäß Anspruch 2, das **dadurch gekennzeichnet ist, dass** das Berechnen und Bestimmen der Größe der unterteilten CBs gemäß der Anzahl der CBs und der Größe des TB nach dem Hinzufügen der CRC folgende Schritte aufweist:
Bestimmen einer Größe eines ursprünglichen TB;
Bestimmen der Anzahl der CBs, nachdem der TB in die CBs unterteilt wurde, gemäß der Größe des ursprünglichen TB, einer Größe eines größten CB und einer Anzahl durch die CRC hinzugefügter Bits; und
Berechnen der Größe des TB nach dem Hinzufügen der CRC gemäß der Größe des ursprünglichen TB und der Anzahl der unterteilten CBs.

4. Das Verfahren zum Erhöhen eines Bitpegeldurchsatzes eines Senders einer LTE-BS gemäß Anspruch 2, das **dadurch gekennzeichnet ist, dass** das Bestimmen des Gruppierens der CBs gemäß den Größen der unterteilten CBs und der erforderlichen Anzahl von Kategorien aufweist, dass: die erforderliche Anzahl von Kategorien zumindest eins beträgt.

5. Das Verfahren zum Erhöhen eines Bitpegeldurchsatzes eines Senders einer LTE-BS gemäß Anspruch 1, das **dadurch gekennzeichnet ist, dass** das Abfertigen der gruppierten CBs wiederum der Mehrzahl von Kategorien, um das Turbocodieren und das Ratenanpassen für die CBs durchzuführen, folgende Schritte aufweist:
Beginnen mit CBs einer ersten Kategorie, um das Turbocodieren und das Ratenanpassen für die gruppierten CBs durchzuführen; und
nachdem das Turbocodieren und das Ratenanpassen für CBs einer Kategorie abgeschlossen sind, Durchführen des Turbocodierens und des Ratenanpassens für CBs einer nächsten Kategorie.

6. Das Verfahren zum Erhöhen eines Bitpegeldurchsatzes eines Senders einer LTE-BS gemäß Anspruch 5, das **dadurch gekennzeichnet ist, dass**, nachdem das Turbocodieren und das Ratenanpassen für CBs einer Kategorie abgeschlossen sind, das Verfahren folgenden Schritt aufweist:
Durchführen einer Bitpegel-Datenspeicherung für die CBs nach der Ratenanpassung.

7. Eine Vorrichtung zum Erhöhen eines Bitpegeldurchsatzes eines Senders einer Long Term Evolution-, LTE-, Basisstation, BS mit einem Modul zur Hinzufügung einer zyklischen Redundanzprüfung, CRC, 24a eines Sendeblocks, TB, einem Modul zum Unterteilen von Codeblöcken, CBs, einem Modul zum CB-Turbocodieren und einem Modul zum CB-Ratenanpassen, wobei die Vorrichtung ferner folgende Merkmale aufweist: ein Gruppierungsmodul und ein Abfertigungsmodul; wobei:
das Gruppierungsmodul ausgebildet ist, um die unterteilten CBs wiederum gemäß einer Größe in eine Mehrzahl von Kategorien zu gruppieren; und
das Abfertigungsmodul ausgebildet ist, um die gruppierten CBs wiederum der Mehrzahl von Kategorien abzufertigen, um ein Turbocodieren und Ratenanpassen für die CBs durchzuführen;
wobei das Turbocodieren den Prozess eines inneren Verschachtelns aufweist und das Ratenanpassen außerdem den Prozess eines Zeile-Spalte-Verschachtelns aufweist.

8. Die Vorrichtung zum Erhöhen eines Bitpegeldurchsatzes eines Senders einer LTE-BS gemäß Anspruch 7, die **dadurch gekennzeichnet ist, dass** das Gruppierungsmodul ferner ein Berechnungsmodul aufweist, das ausgebildet ist, um eine Größe der unterteilten CBs gemäß einer Anzahl der CBs und einer Größe eines TB nach dem Hinzufügen der CRC zu berechnen und zu bestimmen; und
das Gruppieren der unterteilten CBs wiederum gemäß der Größe in eine Mehrzahl von Kategorien durch das Gruppierungsmodul Folgendes aufweist: Bestimmen des Gruppierens der CBs gemäß Größen der unterteilten CBs und einer erforderlichen Anzahl von Kategorien, wobei die CBs in einem derartigen Modus gruppiert sind, dass ein maximaler Wert maximaler Unterschiede der Größen der CBs in jeder Kategorie kleiner ist als der maximale Wert in einem beliebigen anderen Gruppierungsmodus.

## Revendications

1. Procédé pour augmenter le débit au niveau des bits d'un émetteur d'une Station de Base, BS, à Evolution à Long Terme, LTE, comprenant le fait d'ajouter un Contrôle de Redondance Cyclique, CRC, 24a d'un Bloc de Transmission, TB, et de diviser les Blocs de Code, CB, au cours du traitement au niveau des bits (S21 et S22), dans lequel, après la division des CB, le procédé comprend par ailleurs le fait de:
trier les CB divisés à leur tour en une pluralité de catégories selon leur grandeur; et
envoyer les CB triés à tour de rôle de la pluralité de catégories pour effectuer un codage Turbo et une mise en correspondance des débit pour les CB (S24);
dans lequel le codage Turbo présente le processus d'entrelacement interne, et la mise en correspondance des débits présente également le processus d'entrelacement des rangées et colonnes.

2. Procédé pour augmenter le débit au niveau des bits d'un émetteur d'une BS LTE selon la revendication 1, **caractérisé par le fait que** le tri des CB divisés à leur tour en la pluralité de catégories selon leur grandeur comprend le fait de:
calculer et déterminer une grandeur des CB divisés selon un nombre de CB et une grandeur des TB après l'addition du CRC (S31); et
déterminer le tri des CB selon les grandeurs des CB divisés et d'un nombre de catégories requis (S32),
dans lequel les BC sont triés de sorte que la valeur maximale des différences maximales entre les grandeurs des CB dans chaque catégorie soit inférieure à la valeur maximale dans tout autre mode de tri (S33).

3. Procédé pour augmenter le débit au niveau des bits d'un émetteur d'une BS LTE selon la revendication 2, **caractérisé par le fait que** le calcul et la détermination de la grandeur des CB divisés selon le nombre de CB et la grandeur du TB après l'addition du CRC comprend le fait de:
déterminer une grandeur d'un TB original;
déterminer le nombre de CB après que le TB soit divisé en CB selon la grandeur du TB original, une grandeur d'un CB le plus grand et un nombre de bits ajoutés par le CRC; et
calculer la grandeur du TB après l'addition du CRC selon la grandeur du TB original et le nombre de CB divisés.

4. Procédé pour augmenter le débit au niveau des bits d'un, émetteur d'une BS LTE selon la revendication 2, **caractérisé par le fait que** la détermination du tri des CB selon les grandeurs des CB divisés et le nombre de catégories requis comprend **le fait que**: le nombre de catégories requis est au moins un.

5. Procédé pour augmenter le débit au niveau des bits d'un émetteur d'une BS LTE selon la revendication 1, **caractérisé par le fait que** l'envoi des CB triés à tour de rôle de la pluralité de catégories pour effectuer le codage Turbo et la mise en correspondance du débit pour les CB comprend le fait de:
partir des CB d'une première catégorie pour effectuer le codage Turbo et la mise en correspondance du débit pour les CB triés; et
après que soient terminés le codage Turbo et la mise en correspondance du débit pour les CB d'une catégorie, effectuer le codage Turbo et la mise en correspondance du débit pour les CB d'une catégorie suivante.

6. Procédé pour augmenter le débit au niveau des bits d'un émetteur d'une BS LTE selon la revendication 5, **caractérisé par le fait que**, après que soient terminés le codage Turbo et la mise en correspondance du débit pour les CB d'une catégorie, le procédé comprend le fait de: effectuer la mise en mémoire des données au niveau des bits pour les CB après la mise en correspondance du débit.

7. Dispositif pour augmenter le débit au niveau des bits d'un émetteur d'une Station de Base, BS, à Evolution à Long Terme, LTE, comprenant un module d'addition de Contrôle de Redondance Cyclique, CRC, 24a d'un Bloc de Transmission, TB, un module de division les Blocs de Code, CB, un module de codage Turbo de CB et un module de mise en correspondance du débit de CB, dans lequel le dispositif comprend par ailleurs: un module de tri et un module d'envoi; dans lequel
le module de tri est configuré pour trier les CB divisés à leur tour en une pluralité de catégories selon leur grandeur; et
le module d'envoi est configuré pour envoyer les CB triés à leur tour de la pluralité de catégories pour effectuer un codage Turbo et une mise en correspondance du débit pour les CB;
dans lequel le codage Turbo présente le processus d'entrelacement interne, et la mise en correspondance du débit présente également le processus d'entrelacement des rangées et colonnes.

8. Dispositif pour augmenter le débit au niveau des bits d'un émetteur d'une BS LTE selon la revendication 7, **caractérisé par le fait que** le module de tri comprend par ailleurs un module de calcul configuré pour calculer et déterminer une grandeur des CB divisés selon un nombre des CB et une grandeur d'un TB après l'addition du CRC; et
le tri par le module de tri des CB divisés à leur tour en une pluralité de catégories selon leur grandeur comprend le fait de: déterminer le tri des CB selon les grandeurs des CB divisés et un nombre de catégories requis; où les CB sont triés de sorte que la valeur maximale des différences maximales entre les grandeurs des CB dans chaque catégorie soit inférieure à la valeur maximale dans tout autre mode de tri.
